# EUROPEAN PATENT APPLICATION

(11) **EP 2 611 110 A1**
(43) Date of publication of application: **03.07.2013**
(21) Application number: 11306817.5
(22) Date of filing: 30.12.2011
(51) Int. Cl.: H04L 29/08, H04L 29/06, H04W 4/02, H04N 21/00

(54) **Method for producing professional-like shared user-generated media content**

(71) Applicant: Alcatel Lucent, S.A., 75007 Paris (FR)
(72) Inventor: Ghorbel, Mahmoud, 91620 NOZAY (FR); Sayadi, Bessem, 91620 NOZAY (FR); Saidi, Mohammed Adel, 91620 NOZAY (FR)
(74) Representative: Louiset, Raphael

(57) **Abstract**

Method for producing media content on a shared platform, said method comprising the steps of:
- Upon a communication request received from a first terminal **(7)** equipped with a media production device by a distant communication system **(1),** opening a media session between said first terminal **(7)** and the communication system **(1);**
- Streaming media produced with the media production device from the first terminal **(7)** to the communication system **(1);**
- Memorizing the media streamed from the first terminal **(7)** within a media database **(6)** in the communication system **(1);**
- Upon a communication request sent by at least one second terminal **(7')** equipped with a media production device to the distant communication system **(1),** determining geographical location of the second terminal **(7');**
- As long as said second terminal **(7')** is located in a predetermined vicinity area of said first terminal **(7),** streaming media produced with the media production device from the second terminal **(7')** to the communication system **(1);**
- Producing an enriched media from media streamed from the first and second terminals **(7, 7');**
- Memorizing the enriched media in the media database **(6).**

## Description

### FIELD OF THE INVENTION

The invention relates to the streaming of media content to end users, and more specifically to the streaming of shared user-generated media.

### BACKGROUND OF THE INVENTION

The generalization of interactive media players on computer terminals and modern television sets, either fixed or mobile, together with the wide spreading of shared media platforms, have made it possible for end user to access services which were originally unavailable on conventional television sets providing broadcasted media.

Video on demand (VoD) makes it possible for users to select a video among a database and to have it streamed through an IP (Internet Protocol) communication network, even on mobile handsets - given the high throughput allowed by 3G and 4G mobile networks (up to several Mbytes/sec). Personalization of the streamed media is now even made available, cf. J. Bywater et al, "Scalable and personalized broadcast service", Proceedings of the European Conference on Interactive Television (ECIT), Brighton, UK, March 2004.

At the same time, the spreading of social networks has allowed an end-user having subscribed to a social network to share his/her own media production with other end-users connected to the same social network.

Yet, in the absence of post-production, most of the media shared by end-users shall look amateur to the viewers.

However, attempts were recently made to increase the perceived quality of shared user-made media. In video for example, mashup plug-ins are available, which permit to combine several media sources (video, audio, possibly even text), to form a blended - yet original - video media content. US patent application No. US 2011/138354 (IBM) discloses a Web 2.0-based video mashup player widget.

Attempts were even made to automate video content creation, cf. X.-S. Hua, L.Lu, H.-J. Zhang, "AVE - Automated Home Video Editing", ACM Multimedia 2003, Nov. 2-8, Berkeley, USA.

Despite those attempts, the existing solutions fail to provide end-users with live professional-like media streaming from shared platforms.

### SUMMARY OF THE INVENTION

It is an object to alleviate the drawbacks of the existing solutions in shared media streaming.

It is another object to propose a solution for producing professional-like media streaming from shared platforms, such as social networks.

It is another object to propose a solution for editing professional-looking user-produced media.

The invention provides, according to a first aspect, a method for producing media content on a shared platform, said method comprising the steps of:
- upon a communication request received from first terminal equipped with a media production device by a distant communication system, opening a media session between said first terminal and the communication system;
- streaming media produced with the media production device from the first terminal to the communication system;
- memorizing the media streamed from the first terminal within a media database in the communication system;
- upon a communication request sent by at least one second terminal equipped with a media production device to the distant communication system, determining geographical location of the second terminal;
- as long as said second terminal is located in a predetermined vicinity area of said first terminal, streaming media produced with the media production device from the second terminal to the communication system;
- producing an enriched media from media streamed from the first and second terminals;
- memorizing the enriched media in the media database.

The following steps may also be provided:
- synchronizing the media streamed from the first terminal and the media streamed from the second terminal;
- upon a communication request sent by a third terminal equipped with a media reading device to the communication system, streaming the enriched media from said database to said third terminal.

In a preferred embodiment, streaming the enriched media from said database to said third terminal is achieved real-time.

The invention provides, according to a second aspect, a communication system including:
- a session manager module, programmed to initiate a media session with a distant terminal,
- a location synchronizer module, connected to the session manager module and programmed to
   ○ determine the geographic location of the terminal with which the session manager has opened a media session,
   ○ tag the media content with an identifier corresponding to a vicinity including the location of the terminal
- a media synthesizer module, connected to the location synchronizer module and programmed to:
   ○ collect the media streamed from the terminal after a media session has been set with the terminal by the session manager,
   ○ tag the media content with content-related tags,
   ○ memorize the tagged media within a media database.
- a media streamer module, programmed to extract media content from the database and, upon request of an end-user terminal, to stream the requested media content to the end-user terminal.

The invention provides, according to a third aspect, a computer program implemented on a processing unit of a computer, said program including code sections for performing instructions corresponding to the steps of a method as disclosed hereinbefore.

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

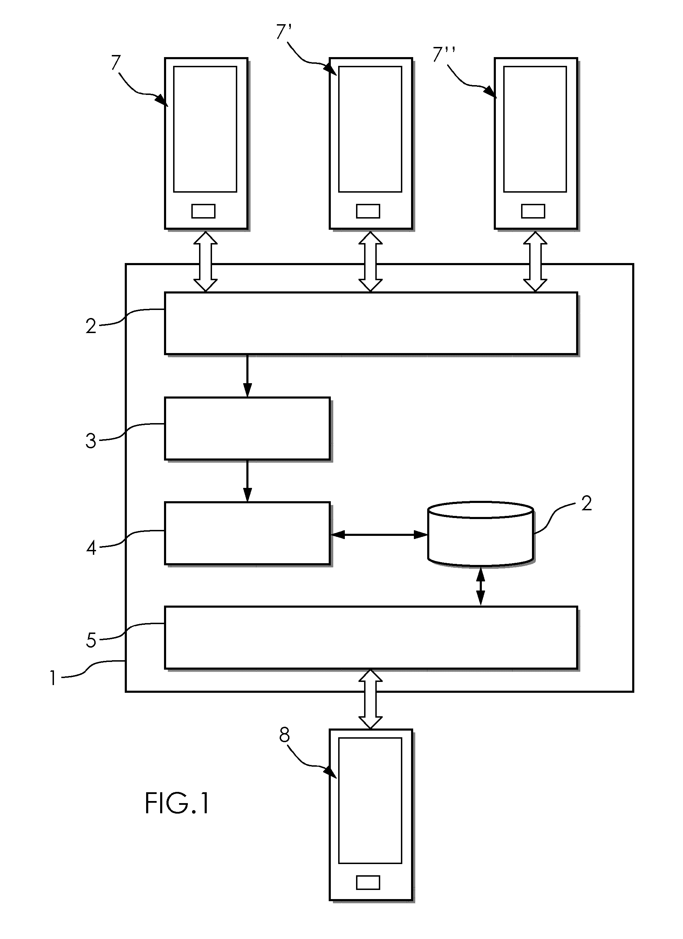

The objects, advantages and other features of the present invention will become more apparent from the following disclosure and claims. The following non-restrictive description of preferred embodiments is given for the purpose of exemplification only with reference to the accompanying drawing which is a schematic diagram showing a network architecture allowing for the editing and sharing of professional-looking user-produced media.

### DETAILED DESCRIPTION OF ILLUSTRATIVE EMBODIMENTS

The appended drawing shows the architecture of a communication system 1 designed for allowing live (real-time) video editing and sharing.

As depicted on the drawing, the system 1 includes several servers, which may be physical servers interconnected through a communication network (LAN, MAN or WAN), or application servers (also called server modules). Servers may use a common communication protocol (such as the Internet Protocol or IP).

In the following description, it is assumed the servers are server application modules and are therefore simply called "modules". In other words, the communication system is a server implemented with a program including code sections for performing the instructions corresponding to the different modules of the system, as disclosed hereafter.

The system **1** includes the following modules:
- a session manager module **2,**
- a location synchronizer module **3,** connected to the session manager module **2,**
- a media synthesizer module **4,** connected to the location synchronizer module **3.**
- a media streamer module **5.**

The system **1** also includes a media database **6,** connected to the media synthesizer module **4** and to the media streamer module **5.**

The session manager **2** is programmed to initiate a media session with a distant user device **7** (or terminal) equipped with communication software (audio/video codecs) and hardware (modem/antenna), whenever the system **1** receives a request to that purpose from the terminal.

It is assumed the terminal **7** is a mobile device, although the disclosed system **1** and method are not restricted to such a case.

In a well-known manner, the media session may be preceded by a signaling procedure in which the terminal **7** sends a communication request to the communication system **1** and authenticates before the session manager upon receipt of an authentication request therefrom. The signaling procedure may be conducted according to SIP (Session initiation protocol).

The location synchronizer **3** is programmed to:
- determine the geographic location of the terminal **7** with which the session manager **2** has opened a media session,
- tag the media content with an identifier corresponding to a vicinity including the location of the terminal **7.**

The location of the terminal **7** may be either:
- provided by the terminal itself, e.g. using an embedded GPS system programmed to edit latitude and longitude coordinates of the present location of the terminal **7,**
- or, whenever the terminal **7** is not equipped with an embedded positioning system or such a positioning system is deactivated, calculated from a triangulation procedure using the coordinates of the closest base stations receiving and relaying the radio signal from the terminal **7.**

The video synthesizer **4** module is programmed to:
- collect the media streamed from the terminal **7** after a media session has been set with the terminal **7** by the session manager **2,**
- tag the media content with content-related tags,
- memorize the tagged media within the media database **6.**

The video streamer module **5** is programmed to extract media content from the database **6** and, upon request of an end-user terminal **8,** to stream the requested media content to the end-user terminal **8.**

The media streamed from the terminal **7** may be in any known format. Video, which is the main application, may be produced and streamed with e.g. MPEG-**4** or MPEG-**7** codecs.

Content-related tagging may be achieved through a roi (region of interest) detection procedure in a known manner. An example of roi detection procedure is proposed in R. Sorschag et al, *"Automatic region of interest detection in tagged images",* Multimedia and Expo, ICME, IEEE International conference, June **8** - July **3, 2009,** in which roi tags are obtained by local feature matching between similarly tagged images. A similarity search may be conducted by the video synthesizer **4** in the media database **6** in which images of the environment corresponding to the tagged vicinity of the terminal **7** may be memorized.

A method for producing media content is now disclosed, as an operational result of the communication system **1** disclosed hereinbefore.

In step **100,** a communication request is sent by a first terminal **7** equipped with a media production device (such as a camera) and received by the communication system **1.**

In step **200,** a signaling procedure is conducted by the session manager **2** to authenticate the terminal **7** and check interoperability of the media codecs implemented within the system **1** and the terminal **7.**

In step **300,** once the signaling procedure has authenticated the first terminal **7** and proved the codecs to be interoperable, the session manager **2** opens a media session with the first terminal **7.**

A localization procedure **400** may be conducted either during the signaling procedure, or during the media session. The localization procedure is initiated by the session manager **2** which activates the location synchronizer module **3.** In turn, the location synchronizer **3** determines the geographical location of the terminal **7** either by extracting location data provided by the terminal **7** during the signaling procedure, or calculating the raw position of the terminal **7** from the coordinates of base stations receiving and relaying the radio signals from the terminal **7.**

In step **500,** the session manager **2** may provide the terminal **7** with the possibility of confirming that the media content which the terminal **7** is about to stream up to the system **1** is to be shared with other terminals **8.** In an alternate way, the sharing is implicit and the terminal **7** is not given the choice to share the media content.

In step **600,** media content produced by the terminal **7** (such as video shots filmed with a camera embedded within the terminal **7)** is streamed from the first terminal **7** to the session manager **2** and relayed by the session manager **2** to the location synchronizer **3.**

In step **700,** the location synchronizer **3** tags the media content streamed from the terminal **7** and relayed by the session manager **2** with a location identifier or flag, which corresponds to a vicinity area around the presumed location of the first terminal **7,** as determined in the localization procedure. The vicinity area may correspond to a ground area of a predetermined width (or radius) encompassing the presumed location of the first terminal **7.** For example, the vicinity area is a circle centered on the presumed location of the first terminal **7,** having a radius of about **50** to **100** m. In an alternate embodiment, the vicinity area is a building block or region comprised between crossing streets encompassing the presumed location of the terminal **7.** The location synchronizer **3** then relays the tagged media stream to the synthesizer module **4.**

In step **800,** the synthesizer module **4** conducts a real-time analysis of the streamed media to detect regions of interest therein, and, whenever regions of interest are detected, produces a tagged media content comprising the original media content with added roi tags.

In step **900,** the synthesizer module **4** memorizes the tagged media content within the media database **6** for further use by the video streamer **5,** as disclosed hereinafter.

Once the system **1** has begun receiving the streamed media content from the first terminal **7,** the system **1** declares the media session open for other terminals **7', 7"** from which users are willing to share a media content, under the condition that those terminals **7', 7"** be located in the vicinity area of the first terminal **7.** For that purpose, a different session token may be allocated by the session manager 2 to each terminal **7', 7"** using the same media session.

Steps **100-900** are therefore repeated for each new terminal **7', 7"** using the same session (with a different token though).

The system **1** is programmed to conduct steps **100-900** for several terminals **7, 7', 7"** at the same time and, for terminals **7, 7', 7"** using the same session, to produce enriched media content from media content provided by all terminals **7, 7', 7".**

The procedure of producing the enriched media content is hereinafter described assuming that only two terminals **7, 7'** use the same session, for the sake of simplicity.

Assuming that the procedure according to steps **100-900** has already been initiated for a first terminal **7,** which triggers the publication of the enriched media content to be shared with other end-user terminals 8, the session is open for any other terminal **7',** as long as this other terminal **7'** is located in the vicinity area of the first terminal **7.**

It is assumed that a communication request is sent by a second terminal **7'** equipped with a media production device (such as a camera) and received by the communication system **1** (step **100').**

Steps **200', 300'** and **400'** are conducted for the second terminal **7'** in the same manner as steps **200, 300** and **400** for the first terminal, except that in step **400'** the location synchronizer **3** checks whether the location determined for the second terminal **7'** stands within the boundaries of the vicinity area associated with the first terminal **7.** It is assumed that such is the case.

In step **600',** the media content (such as video shots filmed with a camera embedded within the second terminal **7')** is streamed from the second terminal **7'** to the session manager **2** through the same session as used by the first terminal **7** (with a different token though) and relayed by the session manager **2** to the location synchronizer **3.**

In step **700',** the location synchronizer **3** tags the media content streamed from the second terminal **7'** and relayed by the session manager **2** with the same location identifier (or flag) as for the first terminal 7.

In step **800',** the synthesizer module **4** conducts a real-time analysis of the media streamed from the second terminal **7'** to detect regions of interest therein, and, whenever regions of interest are detected, produces a tagged media content comprising the original media content from the second terminal **7'** with added roi tags.

In step **900',** the synthesizer module **4** memorizes the tagged media content provided by the location synthesizer module **3** in step **800'** within the media database **6** for further use by the video streamer **5.**

In an alternate yet preferred embodiment, the synthesizer module **4** produces a unique enriched media content from the tagged media contents issued from both terminals **7, 7',** using the roi tags.

More precisely, the synthesizer module:
- compares time data associated with both media contents (such as clock time) to synchronize the media contents;
- compares the roi tags embedded in the tagged media contents produced in step **800/800'** and builds an enriched media content including media elements taken from either media content associated with both terminals **7, 7'** according to predetermined criteria such as quality (i.e. the best quality of image or sound is preferred) and non redundancy (i.e. images taken from different points of view with the same sound are concatenated). The enriched media content is memorized within the media database **6.**

In step **1000,** a request for media streaming is received by the system **1** from a third, client end-user terminal **8** equipped with a media reading device.

In step **1100,** after authentication of the third terminal **8** (i.e. checking that the terminal **8** has subscribed to the shared media streaming service with the communication system **1),** the media streamer **5** identifies within the database **6** the media content requested by the third terminal **8.**

In step **1200,** the media streamer **5** module either:
- extracts from the database 6 an already enriched media content and streams it to the third terminal **8,**
- or extracts from the database **6** tagged media content from several terminals **7, 7',** generates a unique enriched media content formed of the different tagged media contents and streams to the third terminal the enriched media content together with interaction functionalities, including the possibility for the third terminal **8** to switch from one content to another, or to request for other content associated with the same vicinity area.

The hereabove disclosed system and method thus make it possible to produce and stream professional-like media content from shared platforms such as social networks. In modern communication networks with high throughput, the service may be provided live, i.e. real time, the time shifting between production of raw media content and streaming to the end-user terminal being less than **100** ms.

## Claims

1. Method for producing media content on a shared platform, said method comprising the steps of:
- Upon a communication request received from a first terminal **(7)** equipped with a media production device by a distant communication system **(1),** opening a media session between said first terminal **(7)** and the communication system **(1);**
- Streaming media produced with the media production device from the first terminal **(7)** to the communication system **(1);**
- Memorizing the media streamed from the first terminal **(7)** within a media database **(6)** in the communication system **(1);**
- Upon a communication request sent by at least one second terminal **(7')** equipped with a media production device to the distant communication system **(1),** determining geographical location of the second terminal **(7');**
- As long as said second terminal **(7')** is located in a predetermined vicinity area of said first terminal **(7),** streaming media produced with the media production device from the second terminal **(7')** to the communication system **(1);**
- Producing an enriched media from media streamed from the first and second terminals **(7, 7');**
- Memorizing the enriched media in the media database **(6).**

2. Method according to claim 1, further comprising a step of:
- synchronizing the media streamed from the first terminal **(7)** and the media streamed from the second terminal **(7').**

3. Method according to claim 1 or 2, further comprising a step of:
- upon a communication request sent by a third terminal **(8)** equipped with a media reading device to the communication system **(1),** streaming the enriched media from said database **(6)** to said third terminal **(8).**

4. Method according to any of the preceding claims, wherein streaming the enriched media from said database **(6)** to said third terminal (8) is achieved real-time.

5. Communication system **(1)** including:
- a session manager module **(2),** programmed to initiate a media session with a distant terminal **(7),**
- a location synchronizer module **(3),** connected to the session manager module **(2)** and programmed to
○ determine the geographic location of the terminal **(7)** with which the session manager **(2)** has opened a media session,
○ tag the media content with an identifier corresponding to a vicinity including the location of the terminal **(7),**
- a media synthesizer module **(4),** connected to the location synchronizer module **(3)** and programmed to:
○ collect the media streamed from the terminal **(7)** after a media session has been set with the terminal **(7)** by the session manager **(2),**
○ tag the media content with content-related tags,
○ memorize the tagged media within a media database **(6).**
- a media streamer module **(5),** programmed to extract media content from the database **(6)** and, upon request of an end-user terminal **(8),** to stream the requested media content to the end-user terminal **(8).**

6. Computer program implemented on a processing unit of a computer, said program including code sections for performing instructions corresponding to the steps of a method according to any of claims **1-4.**
